# FASCICULE DE BREVET EUROPEEN

(11) **EP 3 616 991 B1**
(45) Date de publication et mention de la délivrance du brevet: **06.05.2026**
(21) Numéro de dépôt: 19184419.0
(22) Date de dépôt: 04.07.2019
(51) Int. Cl.: B60Q 1/04, B60Q 1/08, B60Q 1/12, B60Q 1/14, B62J 6/02, B60Q 1/10

(54) **DISPOSITIF D'ECLAIRAGE ACTIF PLACE SUR UN VÉLO**
AN EINEM FAHRRAD BEFESTIGTE AKTIVE BELEUCHTUNGSVORRICHTUNG
BICYCLE-MOUNTED ACTIVE LIGHTING DEVICE DEVICE

(30) Priorité: 28.08.2018 EP 18191097
(43) Date de publication de la demande: 04.03.2020
(60) Demande divisionnaire: 24190443.2
(73) Titulaire: The Swatch Group Research and Development Ltd, 2074 Marin (CH)
(72) Inventeur: MATTHEY, Olivier, 1453 Mauborget (CH); WILLEMIN, Michel, 2515 Prêles (CH); SCAGLIARINI, Bruno, 1586 Vallamand (CH)
(74) Mandataire: ICB SA

(56) Documents cités:
- WO-A1-2018/112656
- WO-A1-2018/174554
- CN-U- 202 593 696
- CN-U- 205 716 835
- JP-A- 2011 201 382
- JP-A- 2018 062 260

## Description

### DOMAINE TECHNIQUE DE L'INVENTION

L'invention concerne un dispositif d'éclairage pour être placé sur un vélo. Chaque dispositif d'éclairage dispose d'une première optique à au moins une première source de lumière, et d'une seconde optique à au moins une seconde source de lumière, qui sont configurées pour être placés en partie sur le vélo.

### ETAT DE LA TECHNIQUE

Pour éclairer de manière adéquate un chemin ou une route empruntée par un véhicule, il est connu d'utiliser un dispositif d'éclairage ayant un réglage adapté de l'intensité de la lumière générée de phares ou d'autres sources de lumière. Un tel dispositif d'éclairage peut aussi être adapté pour orienter le faisceau de lumière en fonction des virages à effectuer dans l'obscurité ou pour éviter d'éblouir un conducteur d'un véhicule à croiser sur la route.

La demande de brevet WO 2017/023293 A1 décrit un système d'illumination intelligent pour un véhicule à deux roues, tel qu'une bicyclette. Il comprend un agencement de diodes électroluminescentes LED, qui peuvent être sélectionnées indépendamment pour définir une intensité lumineuse désirée. Il est prévu aussi des moteurs pour orienter la lumière selon la hauteur ou l'inclinaison du vélo, des capteurs du mouvement ou d'intensité lumineuse, et un agencement de lumière en fonction de la vitesse du vélo. Cependant toutes les diodes LED sont orientées en même temps par les moteurs et non indépendamment l'une de l'autre. De plus, rien n'est spécifié concernant l'orientation de chaque faisceau de lumière des diodes LED pour adapter la distance de rayonnement et l'intensité de chaque diode LED en fonction de la vitesse ou de l'intensité de lumière détectée, ce qui peut constituer un inconvénient.

La demande de brevet US 2018/0020528 A1 décrit un système d'illumination intelligent pour un vélo. Un agencement de lumière peut être prévu sur la fourche avant du vélo ou aussi sur le casque de la personne à vélo. Il comprend un détecteur de mouvement pour capter l'accélération et la vitesse, et des moyens pour tourner la source de lumière en fonction d'un virage ou de la vitesse et aussi au mouvement de la tête du cycliste de telle manière à ce que le faisceau de lumière soit toujours en ligne avec la direction des yeux du cycliste en regard de la route. Cependant il n'est pas prévu d'orienter différemment deux sources de lumière pour éclairer la route en fonction de la vitesse ou de la luminosité ambiante, ce qui peut constituer un inconvénient.

Le brevet EP 3 036 149 B1 décrit un dispositif d'éclairage pour une bicyclette avec plusieurs diodes LED à disposition. Il est prévu aussi un capteur de lumière. Un élément de commande est prévu pour comparer l'accélération, l'orientation et la vitesse du cycliste selon des données de référence. Une sélection des diodes LED est aussi prévue, mais également pas pour orienter différemment au moins deux sources de lumière pour éclairer la route suivie, ce qui constitue un inconvénient.

Il est également connu par le brevet FR 2 844 759 B1, un phare gyrostable pour une moto. Des moyens sont prévus pour orienter la lumière en fonction des virages effectués notamment. Cependant, rien n'est décrit pour orienter différemment au moins deux sources de lumière pour éclairer la route suivie en tenant compte de la vitesse et de l'intensité de lumière détectée, ce qui constitue un inconvénient.

On connait également du document JP2018062260 un agencement de lumières pour un vélo de manière à diriger la lumière lors du passage d'une courbe sur la route.

On connait encore du document CN205716835 un dispositif d'illumination d'un vélo comprenant notamment un module pour détecter la position courante du vélo.

Il est également connu du document WO2018/112656 une unité à faisceau de lumière adaptatif utilisé notamment pour des phares d'un véhicule.

On connait aussi des documents JP2011201382 et WO201817455 des systèmes intelligents d'illumination des lumières pour un vélo.

### RESUMÉ DE L'INVENTION

L'invention a donc pour but de pallier les inconvénients cités ci-dessus pour réaliser un dispositif d'éclairage actif portable ou placé sur un vélo à au moins deux roues facile d'utilisation et sans complication pour permettre un bon éclairage tenant compte de la vitesse ou de l'inclinaison du véhicule.

A cet effet, l'invention concerne un dispositif d'éclairage actif portable ou placé sur un vélo à au moins deux roues, qui comprend les caractéristiques de la revendication indépendante 1.

Des formes d'exécution particulières du dispositif d'éclairage sont définies dans les revendications dépendantes 2 à 9.

Un avantage du dispositif d'éclairage selon l'invention réside dans le fait qu'un capteur de lumière du dispositif détecte l'intensité de la lumière ambiante de manière à activer la ou les sources de lumière des optiques A et B, si l'intensité de lumière ambiante est en dessous d'un seuil de lumière déterminé. L'activation des sources de lumière peut se faire de manière automatique sur commande d'une unité de contrôle alimentée par une source de tension d'alimentation, telle qu'une batterie.

Avantageusement, l'intensité de lumière des sources de lumière activées est gérée par l'unité de contrôle inversement proportionnelle à l'intensité de la lumière ambiante.

Avantageusement, un capteur de vitesse est prévu dans le dispositif d'éclairage pour activer la source de lumière de l'optique A uniquement si une vitesse du vélo en utilisation dépasse un seuil de vitesse déterminé. La source de lumière de l'optique B peut être activée dès que l'intensité de lumière ambiante est en dessous du seuil de lumière déterminé, et indépendamment de la vitesse du vélo.

Avantageusement, au moins un détecteur d'orientation ou d'inclinaison peut aussi être prévu dans le dispositif d'éclairage pour orienter les sources de lumière en fonction d'un virage effectué par le vélo.

### BRÈVE DESCRIPTION DES FIGURES

Les buts, avantages et caractéristiques d'un dispositif d'éclairage placé sur un vélo à au moins deux roues, apparaîtront mieux dans la description suivante sur la base d'au moins une forme d'exécution non limitative illustrée par les dessins sur lesquels:
- la figure 1 représente un schéma bloc simplifié des composants du dispositif d'éclairage actif selon l'invention,
- la figure 2 représente un schéma bloc d'une forme d'exécution du dispositif d'éclairage actif pour l'activation des sources de lumière des deux optiques A et B en fonction de la vitesse du véhicule sur une route ou un chemin selon l'invention,
- la figure 3 représente un schéma bloc d'une autre forme d'exécution du dispositif d'éclairage actif pour l'orientation des sources de lumière des optiques A et B lors de la prise d'un virage sur une route ou un chemin selon l'invention,
- la figure 4 représente schématiquement un véhicule sur une route ou en chemin avec les sources de lumière activées des deux optiques A et B du dispositif d'éclairage actif en tenant compte de l'intensité de lumière et de la vitesse mesurée pour orienter le faisceau de lumière de l'optique A selon l'invention, et
- les figures 5a, 5b et 5c montrent schématiquement un vélo sur une route ou un chemin prenant un virage pour orienter les sources de lumière des optiques A et B du dispositif d'éclairage actif selon l'invention.

### DESCRIPTION DETAILLEE DE L'INVENTION

Dans la description suivante, il est fait référence à un dispositif d'éclairage placé sur un vélo à au moins deux roues. Tous les composants électroniques, qui sont bien connus d'un homme du métier dans ce domaine technique, ne sont décrits que de manière simplifiée.

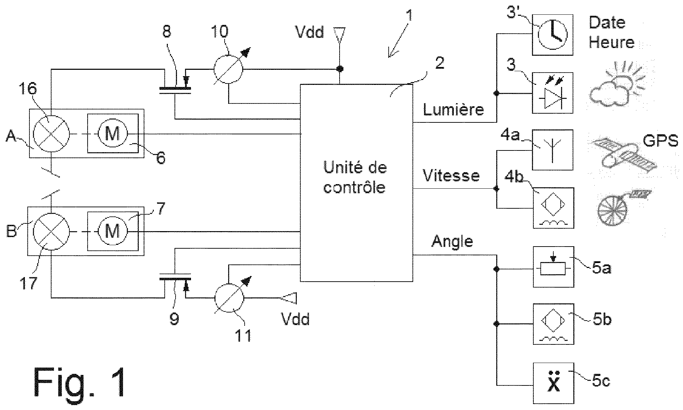

La figure 1 représente de manière simplifiée les différents composants d'un dispositif 1 d'éclairage actif placé sur un vélo à au moins deux roues. Le dispositif 1 d'éclairage comprend deux optiques référencées A et B. La première optique A comprend au moins une première source de lumière 16, alors que la seconde optique B comprend au moins une seconde source de lumière 17. La première source de lumière 16 est prévue pour une illumination à grande distance et de préférence à intensité variable. La seconde source de lumière 17 est prévue pour une illumination à courte distance et de préférence à intensité variable.

Chaque source de lumière 16, 17 est une diode électroluminescente ou un groupement de diodes électroluminescentes sélectionnables par une unité de contrôle 2 ou toutes activables en même temps.

Généralement, chaque optique A et B comprend encore en plus des sources de lumière 16, 17, un agencement de lentilles et miroirs non représenté pour la fourniture d'un faisceau de lumière, ainsi qu'un moyen d'entraînement 6, 7 composé d'un ou deux moteurs électriques, voire de deux pistons ou deux vérins. Dans le cas de figure représenté à la figure 1, il est représenté un premier moyen d'entraînement 6 faisant partie de la première optique A et un second moyen d'entraînement 7 faisant partie de la seconde optique B. De préférence, chaque moyen d'entraînement 6, 7 est commandé par une unité de contrôle 2 reliée à une source d'alimentation continue Vdd. Cette source d'alimentation électrique est de préférence une source de tension continue, qui provient d'une batterie rechargeable ou primaire, ou qui est extraite et redressée d'un rayonnement électromagnétique reçu.

Chaque moyen d'entraînement 6, 7 peut agir sur l'agencement de lentilles et miroirs de l'optique A ou B, ou directement sur chaque source de lumière 16, 17 pour orienter le faisceau de lumière généré par chaque source de lumière activée. De manière à pouvoir orienter par exemple directement les sources de lumière 16, 17 des optiques A, B, chaque moyen d'entraînement 6, 7 peut comprendre deux moteurs. Ainsi les sources de lumière 16, 17 peuvent être entraînées en rotation par chaque moyen d'entraînement 6, 7 contrôlé par l'unité de contrôle 2 autour de deux axes de rotation X, Y perpendiculaires l'un par rapport à l'autre. Le faisceau de lumière généré dans chaque optique A, B est orienté ou dirigé selon une direction Z perpendiculaire aux axes X, Y.

Le dispositif 1 d'éclairage comprend encore un ou plusieurs capteurs 3, 4a, 4b, 5a, 5b, 5c reliés à l'unité de contrôle 2 pour permettre l'activation de chaque source de lumière 16, 17 selon un paramètre mesuré. De préférence, l'unité de contrôle 2, alimenté par la source de tension continue Vdd, est agencée, dès l'utilisation du véhicule, pour contrôler l'éclairage de la ou des sources de lumière 16, 17 des première et seconde optiques A, B de manière automatique.

L'unité de contrôle 2 peut comprendre encore un oscillateur à basse fréquence, qui peut être un oscillateur à quartz horloger ou MEMS, et au moins une mémoire volatile ou non volatile. La mémoire volatile ou non volatile non représentée permet de mémoriser des mesures effectuées par le ou les capteurs et au moins un algorithme de calcul pour la gestion et les calculs des mesures effectuées par les capteurs 3, 4a, 4b, 5a, 5b, 5c. L'unité de contrôle 2 peut être une unité de calcul, tel qu'un processeur ou microcontrôleur pour pouvoir traiter tous les signaux reçus du ou des capteurs de mesure.

Le dispositif 1 d'éclairage comprend un capteur d'intensité lumineuse ou capteur de lumière 3, qui peut être composé d'une cellule solaire ou d'un réseau de cellules solaires. A partir d'un seuil de luminosité détecté par le capteur d'intensité lumineuse 3, l'unité de contrôle 2 commande l'activation d'au moins la seconde source de lumière 17 de la seconde optique B pour une illumination à courte distance. Le seuil d'intensité lumineuse peut dépendre directement de la luminosité ambiante où se situe le véhicule en utilisation. De plus, l'intensité lumineuse de la seconde source de lumière 17 activée est variable et inversement proportionnelle au changement d'intensité de la luminosité ambiante.

Le dispositif 1 d'éclairage comprend au moins un capteur de vitesse 4a, 4b relié à l'unité de contrôle 2. Lors de l'utilisation du vélo, le capteur de vitesse 4a, 4b détermine la vitesse du vélo et à partir du dépassement d'un seuil de vitesse déterminé commande l'activation de la première source de lumière 16 de la première optique A. La première source de lumière 16 génère de la lumière, si l'intensité de lumière ambiante détectée par le capteur de lumière 3 est inférieure à un seuil de lumière déterminé. La seconde source de lumière 17 de la seconde optique B est activée indépendamment de la vitesse du vélo calculée, c'est-à-dire dès le moment où l'intensité de lumière ambiante détectée par le capteur de lumière 3 est inférieure au seuil de lumière déterminé.

Le capteur de vitesse peut être un récepteur GPS ou équivalent 4a ou de préférence un capteur magnétique 4b pour capter le passage d'au moins un aimant permanent disposé sur un rayon ou la jante d'une roue du vélo. Chaque impulsion magnétique de passage de l'aimant permanent à proximité du capteur magnétique 4b, et selon une cadence dans le temps générée par l'oscillateur basse fréquence, permet à l'unité de contrôle 2 de calculer la vitesse et le moment du dépassement du seuil de vitesse déterminé.

Le dispositif 1 d'éclairage peut comprendre encore ou recevoir un calendrier 3' des dates et heures (éphémérides) de chaque mois dans l'année d'un lieu d'utilisation du dispositif, à partir de laquelle la luminosité ambiante est jugée insuffisante. L'unité de contrôle 2 peut mémoriser ce calendrier 3' du lieu déterminé d'utilisation du dispositif pour contrôler l'activation des sources de lumière 16, 17 des optiques A, B, si par exemple le seuil de vitesse déterminé est aussi dépassé. Ce seuil de vitesse déterminé peut être fixé à 15 km/h ou 25 km/h, mais peut être défini à une autre valeur et mémorisé.

Pour ce faire, il est prévu un premier variateur 10 connecté à la source de tension d'alimentation Vdd, qui est relié à un premier interrupteur 8, qui est lui-même relié à la première source de lumière 16. Le premier interrupteur 8 est commandé par l'unité de contrôle 2 pour activer la première source de lumière 16, si l'intensité de lumière ambiante est insuffisante. Un second variateur 11, qui est connecté à la source de tension d'alimentation Vdd, est prévu et relié à un second interrupteur 9, qui est lui-même relié à la seconde source de lumière 17 de la seconde optique B. Ce second interrupteur 9 est commandé par l'unité de contrôle 2 pour activer la seconde source de lumière 17, si l'intensité de lumière ambiante est insuffisante.

Les premier et second interrupteurs 8, 9 sont de préférence des transistors MOS, tels que des transistors PMOS comme représentés, mais des transistors NMOS peuvent aussi être envisagés. La source du premier transistor PMOS 8 est reliée au premier variateur 10, alors que la source du second transistor PMOS 9 est reliée au second variateur 11. La grille du premier transistor PMOS 8 est reliée à l'unité de contrôle 2 pour le rendre conducteur lors de l'activation de la première source de lumière 16, ou non conducteur pour ne pas activer la première source de lumière 16. La grille du second transistor PMOS 9 est reliée à l'unité de contrôle 2 pour le rendre conducteur lors de l'activation de la seconde source de lumière 17 ou non conducteur pour ne pas activer la seconde source de lumière 17.

Il est à noter que chaque variateur 10, 11 peut être une source de courant, dont le courant prévu pour passer dans chaque source de lumière est variable et augmente quand l'intensité de lumière ambiante diminue en dessous du seuil de lumière déterminé. La variation du courant de chaque variateur est contrôlée directement par l'unité de contrôle 2.

Dans une variante de forme d'exécution du dispositif 1, le dispositif 1 d'éclairage comprend au moins un détecteur d'orientation ou d'inclinaison 5a, 5b, 5c relié à l'unité de contrôle 2. Lors de l'utilisation du vélo, le détecteur d'orientation ou d'inclinaison 5a, 5b, 5c détermine par exemple une courbe effectuée par le vélo en utilisation sur un chemin ou une route. Le détecteur d'orientation ou d'inclinaison 5a, 5b, 5c fournit un signal d'orientation à l'unité de contrôle 2, qui commande les premier et second moyens d'entraînement 6, 7. Ces premier et second moyens d'entraînement 6, 7 permettent d'orienter le ou les faisceaux de lumière générés par la ou les sources de lumière 16, 17 de la première optique A et/ou de la seconde optique B dépendant d'une courbe effectuée par le vélo en utilisation sur un chemin ou une route. L'orientation des faisceaux des sources de lumière 16, 17 est telle que, lors d'un virage à droite, les faisceaux de lumière sont orientés vers la droite, et inversement lors d'un virage à gauche.

On peut imaginer dans cette variante d'avoir les deux sources de lumière 16, 17 activées dès que l'intensité de la lumière ambiante est en dessous d'un seuil de lumière déterminé. Cependant il peut aussi être prévu d'activer uniquement la seconde source de lumière 17, si la vitesse détectée par le capteur de vitesse 4a, 4b ne dépasse pas le seuil de vitesse déterminé. De plus, il peut être prévu que les premier et second moyens d'entraînement 6, 7 orientent directement les première et seconde sources de lumière 16, 17 des optiques A et B.

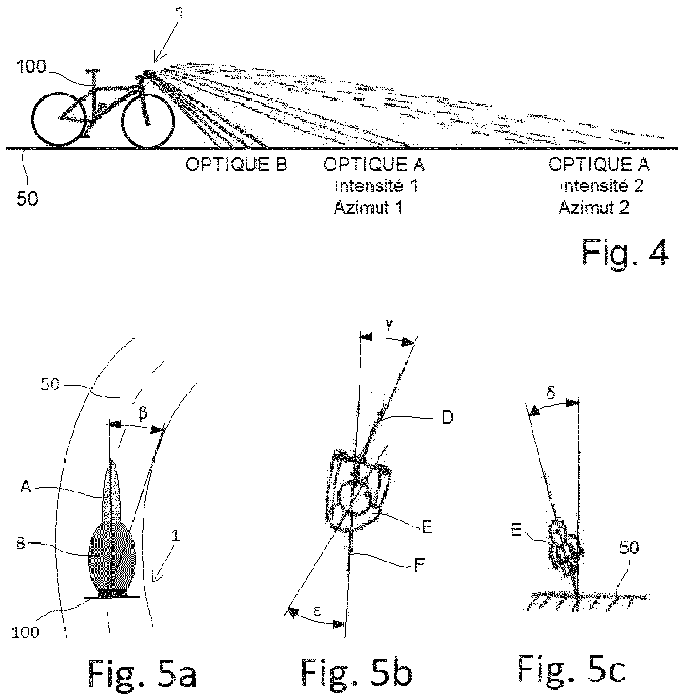

Le détecteur d'orientation peut être composé d'un potentiomètre 5a et/ou d'un magnétomètre 5b et/ou d'un inclinomètre 5c et/ou d'un accéléromètre 5c et/ou d'un gyromètre 5c comme il sera encore expliqué ci-après en référence aux figures 5a à 5c.

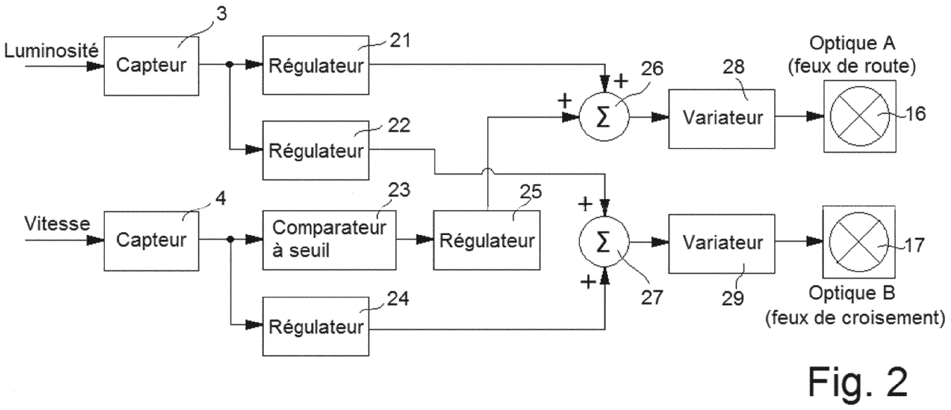

La figure 2 représente la première variante de forme d'exécution du dispositif d'éclairage actif pour l'activation des sources de lumière 16, 17 des deux optiques A et B en fonction de la vitesse du vélo sur une route ou un chemin selon l'invention.

Pour simplifier, il est prévu le capteur de lumière 3, qui fournit un signal à un premier régulateur 21 et à un second régulateur 22 de l'unité de contrôle dans une boucle d'intensité lumineuse. Il est encore prévu le capteur de vitesse 4, qui fournit un signal de vitesse à un comparateur de seuil de vitesse 23 et à un troisième régulateur 24 de l'unité de contrôle. Le comparateur 23 fournit un signal de comparaison à un quatrième régulateur 25 de l'unité de contrôle. L'état du signal de comparaison est soit dans un premier état pour commander l'activation de la première source de lumière 16 de l'optique A, soit dans un second état pour commander la non activation de la première source de lumière 16 de l'optique A. Un premier additionneur 26 est prévu pour additionner le signal de sortie du premier régulateur 21 et le signal de sortie du quatrième régulateur 25, et un second additionneur 27 est prévu pour additionner le signal de sortie du second régulateur 22 et le signal de sortie du troisième régulateur 24. Le signal de sortie du premier additionneur 26 commande un premier variateur 28 pour varier l'intensité lumineuse de la première source de lumière 16 de la première optique A si activée. Le signal de sortie du second additionneur 27 commande un second variateur 29 pour varier l'intensité lumineuse de la seconde source de lumière 17 de la seconde optique B toujours activée, si l'intensité de la lumière ambiante est en dessous d'un seuil de lumière déterminé.

L'intensité lumineuse de la première source de lumière 16 est donc déterminée comme la somme du premier régulateur 21 inversement proportionnel à la luminosité ambiante, et du quatrième régulateur 25 proportionnel à la vitesse de déplacement du vélo. Cependant la première source de lumière 16 n'est activée que lorsqu'un seuil de vitesse déterminé par l'utilisateur est dépassé par exemple 25 km/h avec hystérèse.

L'intensité lumineuse de la seconde source de lumière 17 est donc déterminée comme la somme du second régulateur 22 inversement proportionnel à la luminosité ambiante, et du troisième régulateur 24 proportionnel à la vitesse de déplacement du vélo. Dans ce cas de figure, la seconde source de lumière 27 est toujours activée indépendamment de la vitesse mesurée, si l'intensité de lumière ambiante est en dessous d'un seuil de lumière déterminé.

Bien entendu, lorsque le vélo n'est plus en utilisation, il peut aussi être prévu un interrupteur manuel de manière à désactiver le dispositif d'éclairage avec toutes les sources de lumière. Lesdites sources de lumière peuvent être aussi désactivées après une période d'inutilisation du vélo, c'est-à-dire après un temps déterminé sans mouvement par exemple après 5 minutes.

En comparaison à ce qui a été décrit en référence à la figure 1, on peut considérer que les variateurs 28, 29 de la figure 2 sont similaires à ceux de la figure 1, mais chaque variateur peut être relié à chaque source de lumière 16, 17 par un interrupteur respectif contrôlé par l'unité de contrôle.

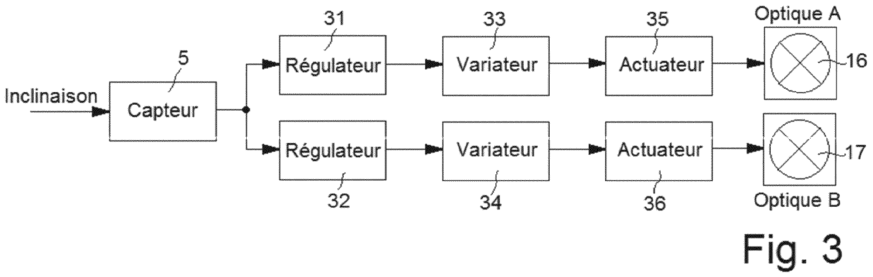

La figure 3 représente une variante de forme d'exécution du dispositif d'éclairage actif pour l'orientation des sources de lumière 16, 17 des optiques A et B lors de la prise d'un virage sur une route ou un chemin selon l'invention. Bien entendu, il est aussi prévu en parallèle un contrôle de la lumière ambiante par un capteur de lumière pour varier l'intensité de lumière des sources de lumière 16, 17, qui sont activées, inversement proportionnelle à la l'intensité de la lumière ambiante.

Pour simplifier dans cette boucle de trajectoire, il est prévu au moins un détecteur d'orientation ou d'inclinaison 5, qui fournit un signal à un premier régulateur 31 et à un second régulateur 32. Le premier régulateur 31 fournit un signal de sortie à un premier variateur de tension 33, et le second régulateur 32 fournit un signal de sortie à un second variateur de tension 34. Le premier variateur de tension 33 contrôle un premier actuateur 35, qui est au moins un moteur électrique. Ce premier actuateur 35 reçoit des signaux de commande du premier variateur 33, tels que des signaux à modulation de largeur d'impulsion (PWM) pour déplacer ou orienter par exemple la première source de lumière 16 de la première optique A. Le second variateur de tension 34 contrôle un second actuateur 36, qui est au moins un moteur électrique. Ce second actuateur 36 reçoit des signaux de commande du second variateur 34, tels que des signaux à modulation de largeur d'impulsion (PWM) pour déplacer ou orienter par exemple la seconde source de lumière 17 de la seconde optique B.

La figure 4 représente schématiquement un vélo 100 sur une route 50 ou un chemin avec les sources de lumière activées des deux optiques A et B du dispositif 1 d'éclairage actif. Les deux sources de lumière sont activées, si la vitesse du vélo est au-dessus d'un seuil de vitesse déterminé et si l'intensité de lumière ambiante est insuffisante, sinon uniquement la seconde source de lumière de l'optique B est activée. Ainsi, l'intensité de lumière I_{LUM}(_{V}, I_{AMB}) de la première source de lumière de l'optique A dépend de la vitesse v du vélo 100, et de l'intensité lumineuse ambiante I_{AMB}. L'intensité de lumière I_{LUM}(I_{AMB}) de la seconde source de lumière de l'optique B ne dépend que de l'intensité lumineuse ambiante I_{AMB}.

Comme montré à la figure 4, il peut encore être prévu, que plus la vitesse du vélo augmente, et plus le faisceau de lumière de la première source de lumière de l'optique A augmente en intensité lumineuse. De plus, le premier moyen d'entraînement de l'optique A oriente ladite source de lumière pour éclairer encore plus loin jusqu'à un azimut vertical, qui tend vers 0. L'intensité lumineuse de chaque source de lumière peut varier proportionnellement à l'inverse de l'intensité de lumière ambiante, voire également par palier.

Les figures 5a, 5b, 5c montrent schématiquement un vélo 100 sur une route 50 ou un chemin prenant un virage pour orienter les sources de lumière des optiques A et B du dispositif 1 d'éclairage actif. Chaque optique A, B peut être montée par exemple sur un guidon du vélo 100. Le ou les détecteurs d'orientation ou d'inclinaison sont par exemple un magnétomètre 5b ou un inclinomètre 5c ou un accéléromètre 5c ou un gyromètre 5c ou un potentiomètre 5a ou une combinaison de ces détecteurs comme précédemment mentionné.

Le détecteur d'orientation ou d'inclinaison peut être monté sur un support, tel qu'un casque de l'utilisateur E du vélo 100 et pour fournir un signal d'orientation par une communication bidirectionnelle sans fil à l'unité de contrôle disposée sur le guidon du vélo 100. Ceci permet de contrôler l'orientation de la ou des sources de lumière par un mouvement de la tête de l'utilisateur E du vélo 100.

A la figure 5a, les deux sources de lumière des optiques A et B du dispositif 1 d'éclairage sont activées, et doivent être orientées par les moyens d'entraînement sur commande de l'unité de contrôle selon un angle β en fonction du virage effectué sur la route 50.

A la figure 5b, l'unité de contrôle tient compte d'un angle de rotation γ de la roue avant D du vélo et aussi du mouvement angulaire ε de la tête de l'utilisateur E du vélo par rapport à la direction de la roue arrière F.

A la figure 5c, il peut aussi être tenu compte de l'inclinaison du vélo avec l'utilisateur E d'un angle δ par rapport à la route 50 pour orienter les sources de lumière.

A partir de la description qui vient d'être faite, plusieurs variantes de réalisation d'un dispositif d'éclairage actif pour être placé sur un vélo à au moins deux roues sont possibles sans sortir du cadre de l'invention définie par les revendications suivantes.

## Revendications

1. Dispositif (1) d'éclairage actif pour être disposé sur un vélo (100)
le dispositif comprenant:
- au moins une source d'alimentation électrique (Vdd),
- une première optique (A) avec au moins une première source de lumière (16) à intensité variable pour une illumination à grande distance, ladite première source de lumière (16) étant contrôlée par une unité de contrôle (2) reliée à la source d'alimentation électrique (Vdd),
- une seconde optique (B) avec au moins une seconde source de lumière (17) à intensité variable pour une illumination à courte distance, ladite seconde source de lumière (17) étant contrôlée par l'unité de contrôle (2) reliée à la source d'alimentation électrique (Vdd),
- un capteur de lumière (3) pour déterminer l'intensité lumineuse d'un endroit où se situe le dispositif (1) d'éclairage et pour fournir un signal de mesure à l'unité de contrôle (2), qui est agencée pour activer automatiquement au moins la seconde optique (B) si l'intensité de lumière ambiante est en dessous d'un seuil de lumière déterminé, et pour adapter l'intensité lumineuse de la ou des sources de lumière (16, 17) de la première optique (A) si activée et/ou de la seconde optique (B), et
- un capteur de vitesse (4a, 4b) pour déterminer la vitesse du dispositif (1) en utilisation sur un chemin ou une route, et pour fournir un signal de mesure à l'unité de contrôle (2) pour commander l'activation de la première source de lumière (16) de la première optique (A) à partir d'au moins un seuil de vitesse déterminé,
**caractérisé en ce que** pour l'activation des sources de lumière (16, 17) des deux optiques (A, B) en fonction de la vitesse du dispositif sur une route ou un chemin, le capteur de lumière (3) est agencé pour fournir un signal à un premier régulateur (21) et à un second régulateur (22) de l'unité de contrôle (2) dans une boucle d'intensité lumineuse, **en ce que** le capteur de vitesse (4) est agencé pour fournir un signal de vitesse à un comparateur de seuil de vitesse (23) et à un troisième régulateur (24) de l'unité de contrôle (2), le comparateur (23) fournissant un signal de comparaison à un quatrième régulateur (25) de l'unité de contrôle (2), l'état du signal de comparaison étant soit dans un premier état pour commander l'activation de la première source de lumière (16) de l'optique (A), soit dans un second état pour commander la non activation de la première source de lumière (16) de l'optique (A), et
**en ce qu'**un premier additionneur (26) est prévu pour additionner le signal de sortie du premier régulateur (21) et le signal de sortie du quatrième régulateur (25), **en ce qu'**un second additionneur (27) est prévu pour additionner le signal de sortie du second régulateur (22) et le signal de sortie du troisième régulateur (24), **en ce que** le signal de sortie du premier additionneur (26) est prévu pour commander un premier variateur (28) pour varier l'intensité lumineuse de la première source de lumière (16) de la première optique (A) si activée, **en ce que** le signal de sortie du second additionneur (27) est prévu pour commander un second variateur (29) pour varier l'intensité lumineuse de la seconde source de lumière (17) de la seconde optique (B) toujours activée, si l'intensité de la lumière ambiante est en dessous d'un seuil de lumière déterminé.

2. Dispositif (1) selon la revendication précédente, **caractérisé en ce que** l'unité de contrôle (2) est agencée, dès l'utilisation du dispositif, pour contrôler l'éclairage de la ou des sources de lumière (16, 17) des première et seconde optiques (A, B) de manière automatique.

3. Dispositif (1) selon la revendication 1, **caractérisé en ce qu'**un premier moyen d'entraînement (6) est prévu pour la première optique (A) pour orienter un faisceau de lumière généré par la première source de lumière (16).

4. Dispositif (1) selon la revendication 1, **caractérisé en ce qu'**un second moyen d'entraînement (7) est prévu pour la seconde optique (B) pour orienter un faisceau de lumière généré par la seconde source de lumière (17).

5. Dispositif (1) selon l'une des revendications 3 et 4, **caractérisé en ce que** le dispositif comprend un détecteur d'orientation (5a, 5b, 5c) pour fournir un signal d'orientation à l'unité de contrôle (2) pour orienter des faisceaux de lumière générés par la ou les sources de lumière (16, 17) de la première optique (A) et/ou de la seconde optique (B) dépendant d'une courbe effectuée par le dispositif (1) en utilisation sur un chemin ou une route.

6. Dispositif (1) selon la revendication 1, **caractérisé en ce que** l'unité de contrôle (2) est agencée pour adapter progressivement l'intensité lumineuse de la ou des sources de lumière (16, 17) de la première optique (A) et/ou de la seconde optique (B) en étant inversement proportionnelle à l'intensité de lumière ambiante captée par le capteur de lumière (3).

7. Dispositif (1) selon la revendication 1, **caractérisé en ce que** l'unité de contrôle (2) est agencée pour adapter par paliers l'intensité lumineuse de la ou des sources de lumière (16, 17) de la première optique (A) et/ou de la seconde optique (B) par rapport à l'intensité de lumière ambiante captée par le capteur de lumière (3).

8. Dispositif (1) selon la revendication 1, **caractérisé en ce que** l'unité de contrôle (2) est un microcontrôleur ayant une mémoire dans laquelle sont mémorisées des dates et heures du jour de l'endroit où se trouve le dispositif (1) d'éclairage pour permettre le fonctionnement de la ou des sources de lumière (16, 17) des première et seconde optiques (A, B) à partir d'une certaine heure de la journée d'une date donnée.

9. Dispositif (1) selon la revendication 1, **caractérisé en ce que** le capteur de vitesse (4a, 4b) est composé d'un récepteur GPS (4a) ou d'un capteur magnétique (4b) monté sur une fourche d'une roue du vélo (100) pour détecter le passage d'un aimant permanent monté sur un rayon ou une jante de la roue afin de déterminer la vitesse du vélo (100).

## Patentansprüche

1. Aktive Beleuchtungsvorrichtung (1) zur Anordnung an einem Fahrrad (100), wobei die Vorrichtung Folgendes umfasst:
- mindestens eine Stromversorgungsquelle (Vdd),
- eine erste Optik (A) mit mindestens einer ersten Lichtquelle (16) mit variabler Intensität für eine Fernbeleuchtung, wobei diese erste Lichtquelle (16) durch eine mit der Stromversorgungsquelle (Vdd) verbundene Steuereinheit (2) gesteuert wird,
- eine zweite Optik (B) mit mindestens einer zweiten Lichtquelle (17) mit variabler Intensität für eine Kurzstreckenbeleuchtung, wobei diese zweite Lichtquelle (17) durch die mit der Stromversorgungsquelle (Vdd) verbundene Steuereinheit (2) gesteuert wird,
- einen Lichtsensor (3) zur Bestimmung der Lichtintensität an einem Ort, an dem sich die Beleuchtungsvorrichtung (1) befindet, und zur Lieferung eines Messsignals an die Steuereinheit (2), die so eingerichtet ist, dass sie automatisch mindestens die zweite Optik (B) aktiviert, wenn die Umgebungslichtintensität unter einem bestimmten Lichtschwellenwert liegt, und die Lichtintensität der Lichtquelle(n) (16, 17) der ersten Optik (A), falls aktiviert, und/oder der zweiten Optik (B) anpasst, und
- einen Geschwindigkeitssensor (4a, 4b) zur Bestimmung der Geschwindigkeit der Vorrichtung (1) bei Verwendung auf einem Weg oder auf einer Straße und zur Bereitstellung eines Messsignals an die Steuereinheit (2) zur Steuerung der Aktivierung der ersten Lichtquelle (16) der ersten Optik (A) ab mindestens einem bestimmten Geschwindigkeitsgrenzwert,
**dadurch gekennzeichnet, dass** zur Aktivierung der Lichtquellen (16, 17) der beiden Optiken (A, B) in Abhängigkeit von der Geschwindigkeit der Vorrichtung auf einer Straße oder einem Weg der Lichtsensor (3) so ausgelegt ist, dass er in einer Lichtintensitätsschleife ein Signal an einen ersten Regler (21) und einen zweiten Regler (22) der Steuereinheit (2) liefert, wobei der Geschwindigkeitssensor (4) so ausgelegt ist, dass er ein Geschwindigkeitssignal an einen Geschwindigkeitsschwellenkomparator (23) und an einen dritten Regler (24) der Steuereinheit (2) liefert, wobei der Komparator (23) ein Vergleichssignal an einen vierten Regler (25) der Steuereinheit (2) liefert, wobei der Zustand des Vergleichssignals entweder in einem ersten Zustand ist, um die Aktivierung der ersten Lichtquelle (16) der Optik (A) zu steuern, oder in einem zweiten Zustand, um die Nichtaktivierung der ersten Lichtquelle (16) der Optik (A) zu steuern, und
wobei ein erster Addierer (26) zur Addition des Ausgangssignals des ersten Reglers (21) und des Ausgangssignals des vierten Reglers (25) vorgesehen ist, wobei ein zweiter Addierer (27) zur Addition des Ausgangssignals des zweiten Reglers (22) und des Ausgangssignals des dritten Reglers (24) vorgesehen ist, wobei das Ausgangssignal des ersten Addierers (26) zur Ansteuerung eines ersten Stellers (28) vorgesehen ist, um die Lichtintensität der ersten Lichtquelle (16) der ersten Optik (A), falls aktiviert, zu variieren, wobei das Ausgangssignal des zweiten Addierers (27) zur Ansteuerung eines zweiten Stellers (29) vorgesehen ist, um die Lichtintensität der stets aktivierten zweiten Lichtquelle (17) der zweiten Optik (B) zu variieren, wenn die Intensität des Umgebungslichts unter einem bestimmten Lichtschwellenwert liegt.

2. Vorrichtung (1) nach dem vorstehenden Anspruch, **dadurch gekennzeichnet, dass** die Steuereinheit (2) ab der Verwendung der Vorrichtung so ausgelegt ist, dass sie die Beleuchtung der Lichtquelle(n) (16, 17) der ersten und zweiten Optik (A, B) automatisch steuert.

3. Vorrichtung (1) nach Anspruch 1, **dadurch gekennzeichnet, dass** für die erste Optik (A) ein erstes Antriebsmittel (6) vorgesehen ist, um einen von der ersten Lichtquelle (16) erzeugten Lichtstrahl auszurichten.

4. Vorrichtung (1) nach Anspruch 1, **dadurch gekennzeichnet, dass** ein zweites Antriebsmittel (7) für die zweite Optik (B) vorgesehen ist, um einen von der zweiten Lichtquelle (17) erzeugten Lichtstrahl auszurichten.

5. Vorrichtung (1) nach einem der Ansprüche 3 und 4, **dadurch gekennzeichnet, dass** die Vorrichtung einen Ausrichtungsdetektor (5a, 5b, 5c) umfasst, um der Steuereinheit (2) ein Orientierungssignal zur Ausrichtung von Lichtstrahlen, die von der oder den Lichtquelle(n) (16, 17) der ersten Optik (A) und/oder der zweiten Optik (B) erzeugt werden, in Abhängigkeit von einer Kurve zu liefern, die die Vorrichtung (1) bei Verwendung auf einem Weg oder auf einer Straße durchfährt.

6. Vorrichtung (1) nach Anspruch 1, **dadurch gekennzeichnet, dass** die Steuereinheit (2) so eingerichtet ist, dass sie die Lichtintensität der Lichtquelle(n) (16, 17) der ersten Optik (A) und/oder der zweiten Optik (B) allmählich anpasst, wobei sie umgekehrt proportional zur vom Lichtsensor (3) erfassten Umgebungslichtintensität ist.

7. Vorrichtung (1) nach Anspruch 1, **dadurch gekennzeichnet, dass** die Steuereinheit (2) so eingerichtet ist, dass sie die Lichtintensität der Lichtquelle(n) (16, 17) der ersten Optik (A) und/oder der zweiten Optik (B) stufenweise in Bezug auf die von dem Lichtsensor (3) erfasste Umgebungslichtintensität anpasst.

8. Vorrichtung (1) nach Anspruch 1, **dadurch gekennzeichnet, dass** die Steuereinheit (2) ein Mikrocontroller ist, der einen Speicher aufweist, in dem Daten zu Datum und Uhrzeit des Ortes gespeichert sind, an dem sich die Beleuchtungsvorrichtung (1) befindet, um den Betrieb der Lichtquelle oder der Lichtquellen (16, 17) der ersten und/oder zweiten Optik (A, B) ab einer bestimmten Uhrzeit eines gegebenen Tages zu ermöglichen.

9. Vorrichtung (1) nach Anspruch 1, **dadurch gekennzeichnet, dass** der Geschwindigkeitssensor (4a, 4b) aus einem GPS-Empfänger (4a) oder einem Magnetsensor (4b) besteht, der an einer Gabel eines Rades des Fahrrads (100) montiert ist, um den Durchgang eines Dauermagneten zu erfassen, der an einer Speiche oder an der Felge des Rades montiert ist, um die Geschwindigkeit des Fahrrads (100) zu bestimmen.

## Claims

1. An active lighting device (1) for installation on a bicycle (100), the device comprising:
- at least one electric power source (Vdd),
- a first lens (A) with at least a first variable-intensity light source (16) for long-distance illumination, the said first light source (16) being controlled by a control unit (2) connected to the electric power supply (Vdd),
- a second lens (B) with at least a second variable-intensity light source (17) for short-distance illumination, the said second light source (17) being controlled by the control unit (2) connected to the electric power supply (Vdd),
- a light sensor (3) for determining the luminous intensity of a place in which the lighting device (1) is located and for providing a measurement signal to the control unit (2), which is designed to automatically activate at least the second lens (B) if the ambient light intensity is below a determined light threshold, and to adapt the luminous intensity of the light source(s) (16, 17) in the first lens (A), if activated, and/or in the second lens (B), and
- a velocity sensor (4a, 4b) for determining the velocity of the device (1) when used on a path or road, and for providing a measurement signal to the control unit (2) to control the activation of the first light source (16) in the first lens (A) based on at least one determined velocity threshold,
**characterised in that** to activate the light sources (16, 17) in the two lenses (A, B) according to the velocity of the device on a road or path, the light sensor (3) is designed to provide a signal to a first regulator (21) and to a second regulator (22) in the control unit (2) in a luminous intensity loop, **in that** the velocity sensor (4) is designed to provide a velocity signal to a velocity threshold comparator (23) and to a third regulator (24) in the control unit (2), the comparator (23) providing a comparison signal to a fourth regulator (25) in the control unit (2), the state of the comparison signal being either in a first state to control the activation of the first light source (16) in the lens (A) or in a second state to control the non-activation of the first light source (16) in the lens (A), and
**in that** a first adder (26) is provided to add the output signal from the first regulator (21) and the output signal from the fourth regulator (25), **in that** a second adder (27) is provided to add the output signal from the second regulator (22) and the output signal from the third regulator (24), **in that** the output signal from the first adder (26) is provided to control a first dimmer (28) to vary the luminous intensity of the first light source (16) in the first lens (A) if activated, **in that** the output signal from the second adder (27) is provided to control a second dimmer (29) to vary the luminous intensity of the second light source (17) in the second lens (B), which is always activated, if the ambient light intensity is below a predetermined light threshold.

2. The device (1) according to the preceding claim, **characterised in that** the control unit (2) is designed to automatically control the illumination of the light source(s) (16, 17) in the first and second lenses (A, B) as soon as the device is in use.

3. The device (1) according to claim 1, **characterised in that** a first drive means (6) is provided for the first lens (A) to direct a light beam generated by the first light source (16).

4. The device (1) according to claim 1, **characterised in that** a second drive means (7) is provided for the second lens (B) to direct a light beam generated by the second light source (17).

5. The device (1) according to any of claims 3 and 4, **characterised in that** the device comprises a direction detector (5a, 5b, 5c) to provide a direction signal to the control unit (2) to direct light beams generated by the light source(s) (16, 17) in the first lens (A) and/or in the second lens (B) according to a curve taken by the device (1) when used on a path or road.

6. The device (1) according to claim 1, **characterised in that** the control unit (2) is designed to gradually adapt the luminous intensity of the light source(s) (16, 17) in the first lens (A) and/or in the second lens (B) by being inversely proportional to the ambient light intensity detected by the light sensor (3).

7. The device (1) according to claim 1, **characterised in that** the control unit (2) is designed to adapt the luminous intensity of the light source(s) (16, 17) in the first lens (A) and/or in the second lens (B) in stages relative to the ambient light intensity detected by the light sensor (3).

8. The device (1) according to claim 1, **characterised in that** the control unit (2) is a microcontroller with a memory in which dates and times of day of the place in which the lighting device (1) is located are stored to enable the light source or sources (16, 17) in the first and second lenses (A, B) to function from a certain time of day on a given date.

9. The device (1) according to claim 1, **characterised in that** the velocity sensor (4a, 4b) consists of a GPS receiver (4a) or a magnetic sensor (4b) mounted on a fork of a wheel on the bicycle (100) to detect the passage of a permanent magnet mounted on a spoke or rim of the wheel to determine the velocity of the bicycle (100).
